# EUROPÄISCHE PATENTANMELDUNG

(11) **EP 4 647 624 A1**
(43) Veröffentlichungstag der Anmeldung: **12.11.2025**
(21) Anmeldenummer: 24175129.6
(22) Anmeldetag: 10.05.2024
(51) Int. Cl.: F16C 29/00, B65G 37/00, B65G 37/02, E01B 25/26, F16C 29/12, B65G 35/06, B65G 47/64, B65G 54/02

(54) **SCHIENENSYSTEM UND WEICHE FÜR EIN SCHIENENSYSTEM**

(71) Anmelder: RK Rose + Krieger GmbH Verbindungs- und Positioniersysteme, 32423 Minden (DE)
(72) Erfinder: SCHEIBE, Jörg, 31655 Stadthagen (DE); LAMPERT, Rolf, 32584 Löhne (DE); MÖLLER, Ingo, 31746 Auetal (DE); RONIG, Torsten, 31737 Rinteln (DE); KUHN, Lars, 32469 Petershagen (DE); MEIER, Jürgen, 31606 Warmsen (DE); DETERING, Jan, 32052 Herford (DE)
(74) Vertreter: Kleine, Hubertus

(57) **Zusammenfassung**

Die Erfindung betrifft eine Weiche für ein Schienensystem (1), bei der Schienenelemente (2a, 2b, 3a, 3b) relativ zueinander bewegbar angeordnet sind, wobei die Schienenelemente (2a, 2b, 3a, 3b) zwei sich gegenüber liegende Laufprofile (13) umfassen, die seitlich hervorstehende Laufflächen für Laufrollen (62) von Laufwagen (6) aufweisen. Die Weiche zeichnet sich durch mindestens eine Verriegelungsvorrichtung (5) aus, die gegeneinander verfahrbare Klemmbacken (55, 56) aufweist, um die Laufprofile (13) von jeweils zwei der relativ zueinander bewegbaren Schienenelemente (2a, 2b, 3a, 3b) zu klemmen und zueinander auszurichten. Die Erfindung betrifft weiterhin ein Schienensystem (1) mit mindestens einer derartigen Weiche.

## Beschreibung

Die Erfindung betrifft eine Weiche für ein Schienensystem, bei der Schienenelemente zueinander bewegbar angeordnet sind, wobei die Schienenelemente zwei sich gegenüber liegende Laufprofile umfassen, die seitlich hervorstehende Laufflächen für Laufrollen von Laufwagen aufweisen. Die Erfindung betrifft weiterhin ein Schienensystem mit einer Weiche.

Derartige Schienensysteme werden beispielsweise für Material- oder Werkstücktransportbahn in Produktionsstraßen und/oder einem Materiallager eingesetzt. Schienen des Schienensystems können dabei beispielsweise zwei parallel zueinander und horizontal beabstandet voneinander angeordnete Rundstäbe aufweisen, die konvexe Laufflächen bereitstellen. Auf dem Schienensystem können sich Laufwagen bewegen, die beispielsweise einem Materialtransport dienen. Die Laufwagen weisen Laufrollen auf, die an vertikalen Achsen in einer Ebene montiert sind und die paarweise jeweils die Schienen mit den parallel verlaufenden Rundstäben umgreifen. Die Laufwagen können aufgrund dieser Art der Führung hohe Kippbelastungen in Fahrtrichtung und quer dazu aufnehmen und lassen entsprechend hohe Kurvengeschwindigkeiten und hohe Beschleunigungen bzw. Verzögerungen zu. Es lassen sich so bei einer bevorzugt automatisierten Materialtransportbahn in einer industriellen Produktionsumgebung vorteilhaft hohe Transportgeschwindigkeiten und eine hohe Wagentaktung erzielen.

Um verschiedene Ziele anzusteuern bzw. unterschiedliche Routen zu befahren, werden in Schienensystemen Weichen eingesetzt, die wahlweise unterschiedliche Schienenelemente miteinander verbinden.

Eine Weiche für ein Schienensystem einer Material- oder Werkstücktransportbahn ist beispielsweise in der Druckschrift DE 43 05 347 A1 beschrieben. Die Weiche umfasst einen Drehteller, auf dem ein bewegbares Schienenelement angeordnet ist, das durch eine Verdrehung des Tellers mit unterschiedlichen feststehenden Schienenelementen gekoppelt werden kann. Abhängig von der Genauigkeit der Einnahme einer Drehposition des Drehteilers wird ein mehr oder weniger versatzfreier Übergang zwischen den Schienenelementen erzielt.

Mit zunehmenden Fahrgeschwindigkeiten der Laufwagen eines Schienensystems und mit zunehmenden Traglasten steigen Querbelastungen auf insbesondere gekrümmte Schienenelemente. Dieses gilt auch für Schienenelemente der Weichen, was eine möglichst versatzfreie Positionierung der Schienenelemente zueinander erschwert. Ein Versatz zwischen den Schienenelementen ist jedoch materialbelastend für die Schienen und die Laufwagen und geht mit einer erhöhten Geräuschbelastung einher.

Es ist daher eine Aufgabe der vorliegenden Erfindung, eine Weiche für ein Schienensystem bzw. ein Schienensystem mit einer Weiche zu schaffen, bei denen ein Versatz zwischen festen und bewegbaren Schienenelementen möglichst gering ist.

Diese Aufgabe wird durch eine Weiche bzw. ein Schienensystem mit den Merkmalen der unabhängigen Ansprüche gelöst. Vorteilhafte Ausgestaltungen und Weiterbildungen sind Gegenstand der abhängigen Ansprüche.

Eine erfindungsgemäße Weiche der eingangs genannten Art zeichnet sich durch mindestens eine Verriegelungsvorrichtung aus, die gegeneinander verfahrbare Klemmbacken aufweist, um die Laufprofile von jeweils zwei der relativ zueinander bewegbaren Schienenelemente zu klemmen und zueinander auszurichten.

Durch die aktive Klemmung der Laufprofile aneinander angrenzender Schienenelemente werden diese genau zueinander ausgerichtet und fixiert, so dass beim Übergang der Laufprofile kein oder ein nur verschwindend kleiner Versatz zwischen den Laufprofilen vorliegt, auch wenn große Querkräfte auftreten. Der Übergang zwischen den relativ zueinander bewegbaren Schienenelementen der Weiche kann so geräuscharm und materialschonend von den Laufwagen überfahren werden. Bei auseinander gefahrenen Klemmbacken können die Schienenelemente relativ zueinander bewegt werden, um die Weiche umzustellen.

In einer vorteilhaften Ausgestaltung der Weiche stehen die Laufprofile der relativ zueinander bewegbaren Schienenelemente über ein Tragprofil hervor, wobei die Klemmbacken die Laufprofile in überstehenden Laufprofilabschnitten klemmen. Durch die überstehenden Laufprofilabschnitte können die Laufprofile vorteilhaft nah an der Übergangsstelle und damit genauer zueinander ausgerichtet werden. Zudem wird eine Ausrichtung der beiden am Schienenelement gegenüberliegenden Laufprofile unabhängig voneinander möglich, wodurch auch eine leichte axiale Verdrehung der Schienenelemente zueinander korrigiert werden kann.

Bevorzugt weisen die Klemmbacken Klemmprofile auf, die an die Laufprofile angepasst sind, so dass mit dem Zufahren der Klemmbacken nicht ein eventuell bestehender Versatz fixiert wird, sondern während des Zufahrens der Klemmbacken zuerst eine Ausrichtung erfolgt und dann die Fixierung.

In einer vorteilhaften Ausgestaltung der Weiche weist die mindestens eine Verriegelungsvorrichtung eine Gewindespindel auf, die durch Gewinde in den Klemmbacken führt. Die Gewinde können in die Klemmbacken geschnitten sein oder es kann alternativ jeweils eine Spindelmutter in die Klemmbacken eingesetzt sein, durch die die Gewinde gebildet sind. Bevorzugt ist die Gewindespindel abschnittsweise mit einem Rechtsgewinde und abschnittsweise mit einem Linksgewinde versehen. Dazu passend weist die mindestens eine Verriegelungsvorrichtung zwei Klemmbacken auf, von denen eine mit dem Rechtsgewinde und die andere mit dem Linksgewinde zusammenwirkt. Bei dieser Anordnung kann durch einfache Drehung der Gewindespindel eine symmetrische Bewegung der Klemmbacken aufeinander zu bzw. voneinander weg erzielt werden.

Die Gewindespindel ist dabei bevorzugt über eine längenausgleichende Kupplung, die beispielsweise einen Metallbalg aufweisen kann, mit einem Antriebsmotor drehfest gekoppelt. Durch die längenausgleichende Kupplung können sich die Klemmbacken in ihrer absoluten Position in der Verfahrrichtung an die Position der Laufprofile anpassen. Weiter bevorzugt sind die Klemmbacken dazu an der mindestens einen Verriegelungsvorrichtung schwimmend gelagert, bevorzugt sowohl im Hinblick auf ihre Position in ihrer Bewegungsrichtung, als auch seitlich dazu.

Zu diesem Zweck der schwimmenden Lagerung kann mindestens eine der Klemmbacken gegenüber einer Basis der Verriegelungsvorrichtung durch mindestens einen Führungsstift in ihrer Bewegungsrichtung geführt sein. Zudem können die Klemmbacken durch mindestens eine Führungsleiste zueinander in ihrer Bewegungsrichtung geführt sein.

Ein erfindungsgemäßes Schienensystem weist Schienenelemente auf, die zwei sich gegenüber liegende Laufprofile umfassen, die seitlich hervorstehende Laufflächen für Laufrollen von Laufwagen aufweisen. Das Schienensystem zeichnet sich dadurch aus, dass es mindestens eine derartige Weiche aufweist. Es ergeben sich die im Zusammenhang mit der Weiche genannten Vorteile.

Die Erfindung wird nachfolgend anhand eines Ausführungsbeispiels mithilfe von Figuren näher erläutert. Die Figuren zeigen:
- Fig. 1: einen Ausschnitt aus einem Schienensystem mit einem Teil einer Weiche in einer räumlichen Darstellung;
- Fig. 2: eine detailliertere Darstellung eines Abschnitts des Schienensystems der Figur 1;
- Fig.3: die Anordnung aus Figur 2 mit einem Fahrwerk eines Laufwagens für das Schienensystem;
- Fig. 4: eine Verriegelungsvorrichtung für das Schienensystem in einer räumlichen Darstellung;
- Fig. 5: die Verriegelungsvorrichtung der Figur 4 in einer räumlichen Explosionsdarstellung; und
- Fig. 6: eine Schnittdarstellung der Verriegelungsvorrichtung der Figuren 4 und 5.

In allen Figuren kennzeichnen gleiche Bezugszeichen gleiche beziehungsweis gleich wirkende Elemente. Aus Gründen der Übersichtlichkeit sind nicht in allen Figuren alle Elemente mit Bezugszeichen versehen.

Richtungsangaben wie "rechts" oder "links" beziehen sich auf die Darstellungen der Figuren. Lediglich die Richtungsangaben "oben" und "unten" beziehen sich auf eine natürliche Ausrichtung eines Schienensystems im Betrieb, bei dem Laufwagen auf dem Schienensystem sich im Wesentlichen waagerecht bewegen.

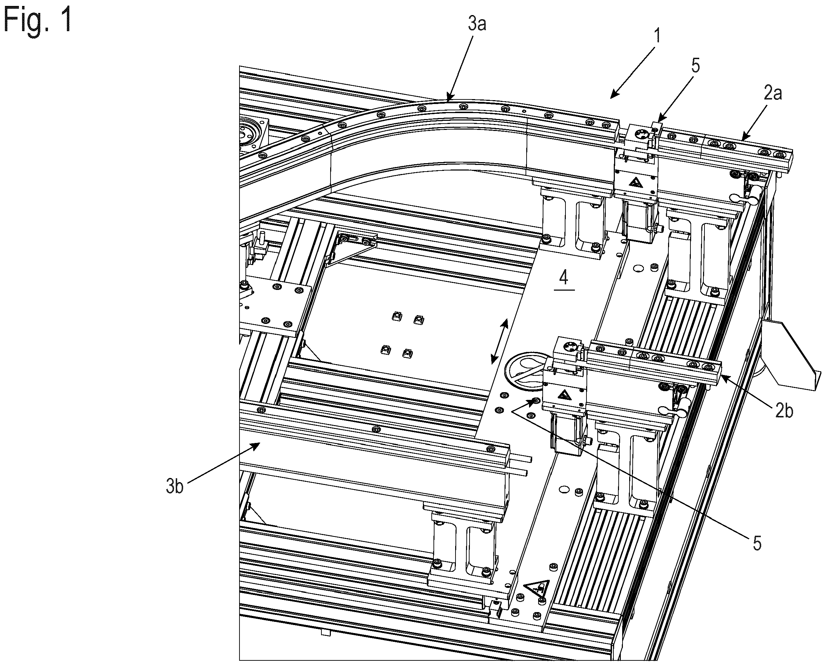

Figur 1 zeigt zunächst in einer räumlichen Darstellung einen Ausschnitt aus einem Schienensystem 1. Gezeigt sind zwei feststehende Schienenelemente 2a, 2b, die innerhalb eines Gesamtsystems nicht wie hier dargestellt enden, sondern nach rechts gesehen (in der Figur 1) weitergeführt sind. Die beiden feststehenden Schienenelemente 2a, 2b sind zwei alternativ befahrbaren Schienenabschnitten des Schienensystems 1 zugeordnet.

Weiter sind zwei bewegbare Schienenelemente 3a, 3b gezeigt, die gemeinsam auf einer Parallelführung 4 senkrecht (zur Fahrrichtung auf dem Schienenelement 3b) bewegbar sind. Die bewegbaren Schienenelemente 3a, 3b sind zusammen mit der Parallelführung 4 ein Teil einer Weiche des Schienensystems 1.

Im dargestellten Zustand der Weiche ist das bewegbare Schienenelement 3a mit dem feststehenden Schienenelement 2a verbunden, so dass ein Laufwagen, der sich auf dem Schienensystem 1 bewegt, über diese Route geführt werden kann. Eine Route von dem bewegbaren Schienenelement 3b auf das feststehende Schienenelement 2b ist in der dargestellten Stellung der Weiche nicht möglich.

In der hier nicht gezeigten alternativen Stellung der Weiche sind die bewegbaren Schienenelemente 3a, 3b durch die Parallelführung 4 derart verfahren, dass das bewegbare Schienenelement 3b mit dem feststehenden Schienenelement 2b gekoppelt ist und eine Fahrt über diese Route erfolgen kann.

In der Figur 1 nicht dargestellt ist ein sich links in der Figur anschließender Abschnitt des Schienensystems 1, in dem eine Kopplung entweder des bewegbaren Schienenelements 3a oder des bewegbaren Schienenelements 3b mit einem weiteren feststehenden Schienenelement erfolgt. Je nach Stellung der Weiche fährt ein Laufwagen von dem weiteren feststehenden Schienenelement entweder zum feststehenden Schienenelement 2a (in der gezeigten Stellung der Weiche) oder zu dem feststehenden Schienenelement 2b (in der alternativen Stellung der Weiche).

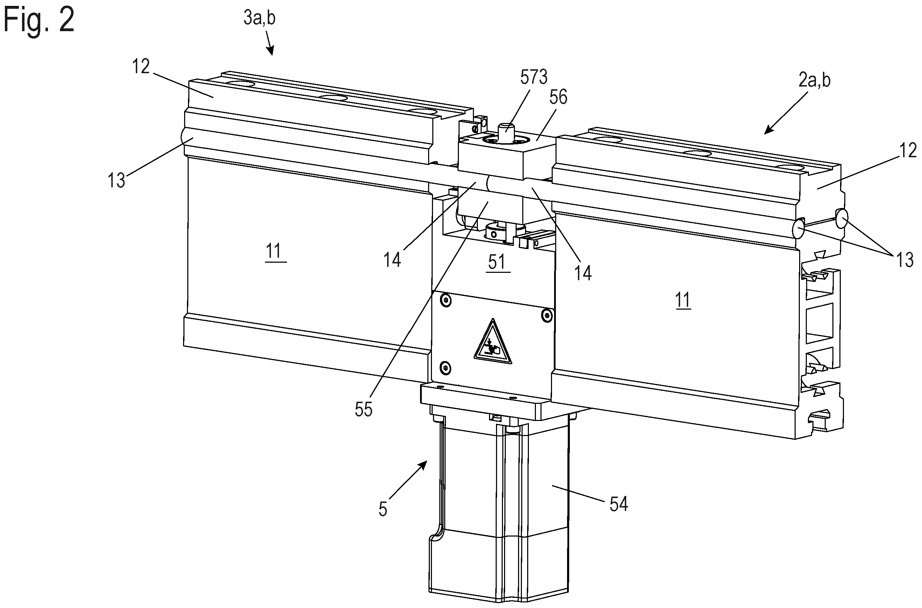

Der Übergang zwischen dem feststehenden Schienenelement 2a und dem bewegbaren Schienenelement 3a (bzw. in der alternativen Stellung der Weiche zwischen dem feststehenden Schienenelement 2b und dem bewegbaren Schienenelement 3b) ist in der Figur 2 in einem Ausschnitt des Schienensystems 1 detaillierter dargestellt.

In der Figur 2 ist auch der Aufbau der Schienenelemente 2a, 2b bzw. 3a, 3b ersichtlich. Jedes Schienenelement weist im Querschnitt ein Tragprofil 11 auf, auf das ein Kopfprofil 12 aufgeschraubt ist. Die Verschraubung erfolgt mit hier nicht sichtbaren Schrauben, deren Köpfe in dem Kopfprofil 12 versenkt sind, so dass sie nicht störend nach oben überstehen.

Zwischen dem Tragprofil 11 und dem Kopfprofil 12 sind zwei Laufprofile 13 eingespannt, die nach außen hin zur Seite überstehen und Laufflächen für Laufwagen bereitstellen. Bei dem dargestellten Ausführungsbeispiel sind die Laufprofile 13 durch Rundstäbe gebildet. Die Laufprofile 13 sind durch entsprechende Profilierung des Tragprofils 11 beziehungsweise des Kopfprofils 12 in der dargestellten parallelen und voneinander beabstandeten Anordnung gehalten. Der Abstand der Laufprofile 13 ist dabei bis auf unvermeidbare Toleranzen gleichbleibend im gesamten Schienensystem 1.

An den aufeinander zuzuweisenden Stirnseiten der Schienenelemente 2a, 2b bzw. 3a, 3b stehen die Laufprofile 13 über die Stirnseiten des Tragprofils 11 bzw. des Kopfprofils 12 hinaus. Es ragen also im Übergangsbereich zwischen den verschiedenen Elementen überstehende Laufprofilabschnitte 14 hervor.

Im Bereich dieser überstehenden Laufprofilabschnitte 14 ist eine Verriegelungsvorrichtung 5 angeordnet, die bevorzugt mit dem feststehenden Schienenelement 2a, 2b mechanisch verbunden, insbesondere verschraubt ist. Die Verriegelungsvorrichtung 5 dient dazu, die bewegbaren Schienenelemente 3a, 3b so genau zueinander auszurichten und zu fixieren, dass beim Übergang der Laufprofile 13 kein Versatz zwischen den überstehenden Laufprofilabschnitten 14 vorliegt, auch wenn Querkräfte auftreten. Solche Querkräfte können beispielsweise aufgrund von Zentripetalkräften wirken, insbesondere wenn sich der Übergangsstelle gekrümmten Schienenabschnitten anschließen. Die Verriegelungsvorrichtung 5 minimieren einen Versatz zwischen den überstehenden Laufprofilabschnitten 14.

Die Verriegelungsvorrichtung 5 weist dazu zwei Klemmbacken 55, 56 auf, die an ihren Seiten ähnlich wie Tragprofil 11 und Kopfprofil 12 so profiliert sind, dass sie die Laufprofile 13 bzw. deren überstehende Laufprofilabschnitte 14 einklemmen und durch ihre Formgebung zueinander ausrichten. Die beiden Klemmbacken 55, 56 können zu diesem Zweck vertikal aufeinander zu gefahren werden, wodurch sie die in Figur 2 dargestellte Anordnung einnehmen.

Unterhalb der Klemmbacken 55, 56 ist die Verriegelungsvorrichtung 5 in einer Querrichtung so breit wie das Tragprofil 11 ausgebildet, sie führt also Seitenflächen des Tragprofils 11 im Wesentlichen fort. Weiter unterhalb und nach unten über die Tragprofile 11 hinausragend ist ein Antriebsmotor 54 zum Verfahren der Klemmbacken 55, 56 an der Verriegelungsvorrichtung 5 angeordnet.

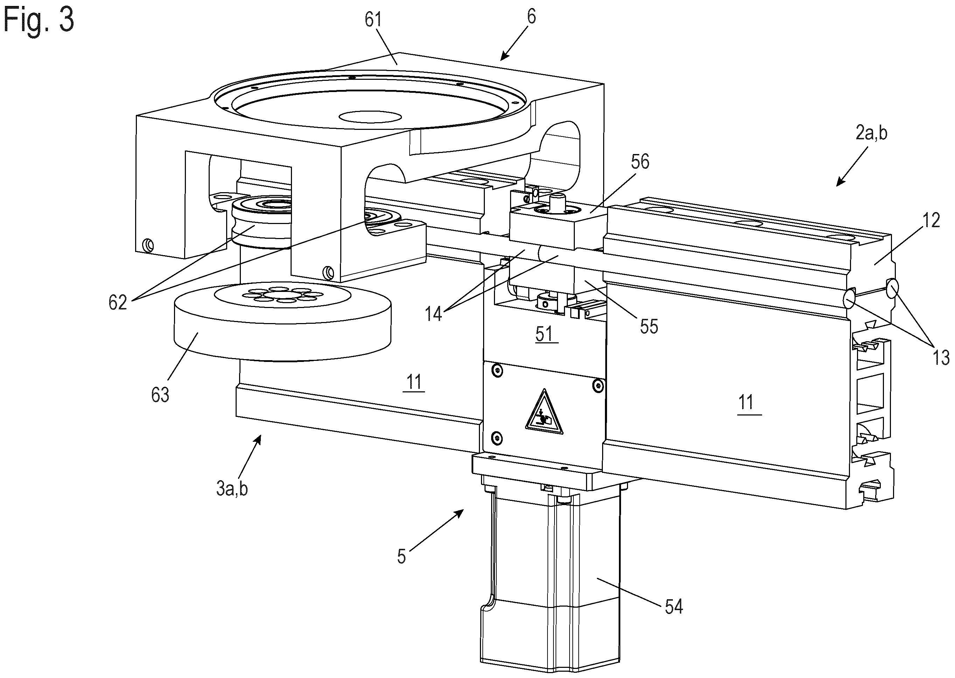

Figur 3 zeigt den Abschnitt des Schienensystems 1 gemäß Figur 2 mit einem nur schematisch und unvollständig dargestellten Teil eines Fahrwerks eines Laufwagens 6. Der Laufwagen 6 bzw. dessen hier gezeigtes Fahrwerk weist einen c-förmigen Träger 61 auf, an dem vier sich paarweise gegenüberliegende Laufrollen 62 angeordnet sind, die jeweils um eine vertikale Achse drehbar gelagert sind. Mit den vier Laufrollen 62 läuft der Laufwagen 6 auf den seitlich herausragenden Abschnitten der Laufprofile 13. Die Laufrollen 62 sind an ihrem Umfang mit einer zu dem Laufprofile 13 komplementären Profil versehen. Passend zu den Rundstäben, die vorliegend das Laufprofil 13 bilden, sind die Laufrollen 62 hier mit einer Rundkehle profiliert.

Der Laufwagen 6 weist zudem zwei gegenüberliegende Antriebsrollen 63 auf, die als Reibräder gegen die Seitenwangen des Tragprofils 11 gedrückt werden. In der Figur 3 ist eine der Antriebrollen 63 sichtbar, die auf der gegenüberliegenden Seite ist in der Figur vom Tragprofil 11 verdeckt. Dadurch, dass die Verriegelungsvorrichtung 5 in Bereich der Seiten des Tragprofils 11 dessen Querschnitt übernimmt, stellen die Verriegelungsvorrichtung 5 ebenso wie die Tragprofile 11 Abrollflächen für die Antriebsrollen 63 dar.

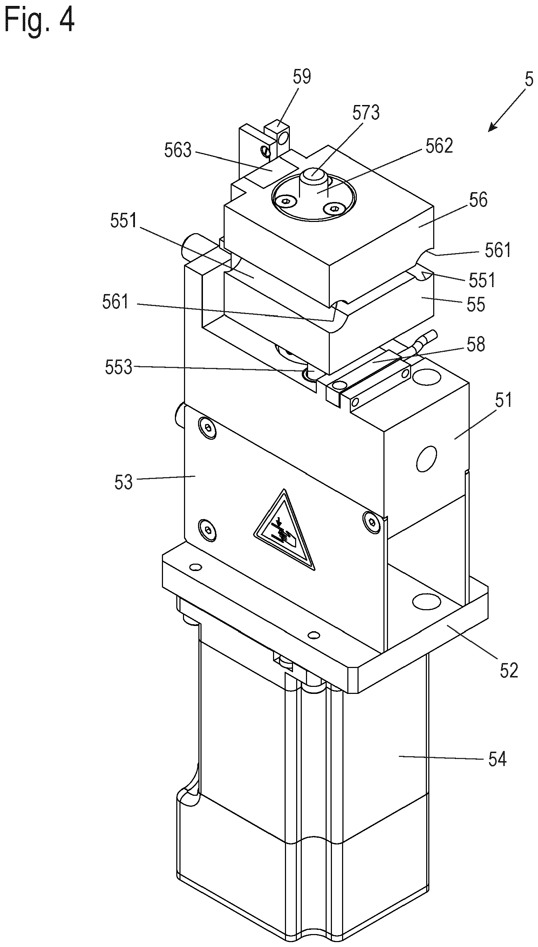

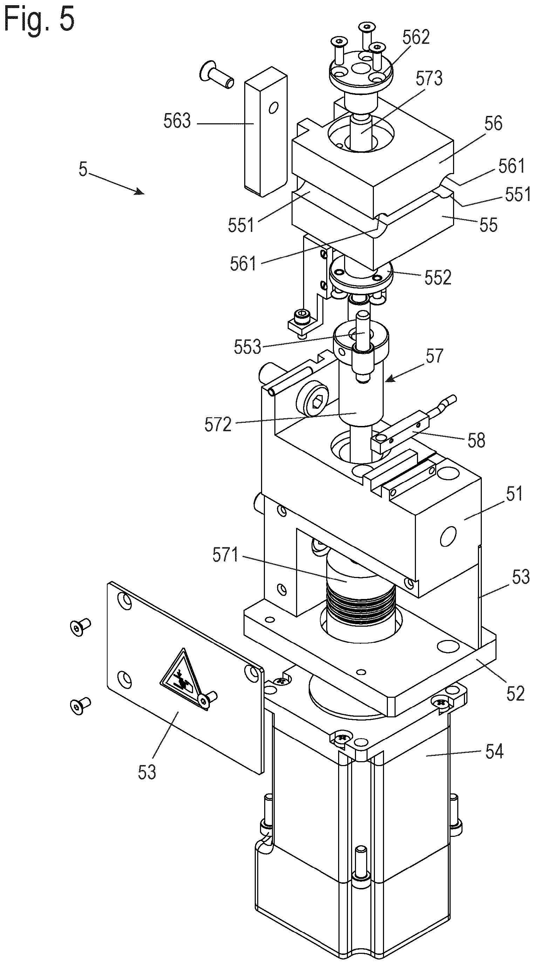

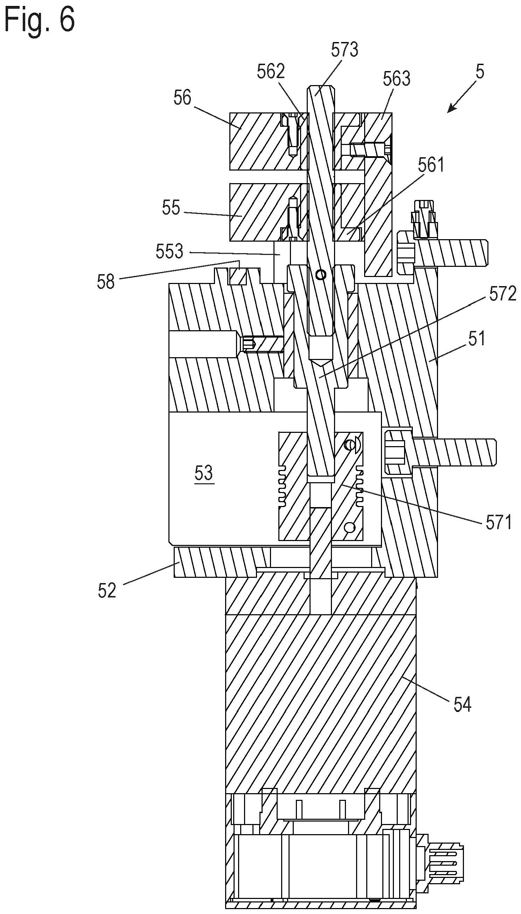

In den Figuren 4-6 ist die Verriegelungsvorrichtung 5 detaillierter in verschiedenen Ansichten wiedergegeben. Die Figur 4 zeigt die Verriegelungsvorrichtung 5 zunächst in einer räumlichen Schrägansicht. Die Figur 5 gibt die Verriegelungsvorrichtung 5 in einer räumlichen Explosionsdarstellung wieder und die Figur 6 zeigt einen vertikalen Querschnitt durch die Verriegelungsvorrichtung 5.

Die Verriegelungsvorrichtung weist eine sie tragende Basis 51 auf, mit der die Verriegelungsvorrichtung 5 an Stirnseiten des Tragprofils 11, bevorzugt eines feststehenden Schienenelements 2a, 2b angeschraubt werden kann. Die Basis 51 ist in ihrer Breite an das Tragprofil 11 angepasst, sodass Seitenflächen der Basis 51 wie im Zusammenhang mit Figur 3 beschrieben als Abrollflächen für die Antriebsrollen 63 dienen können.

Im unteren Bereich der Basis 51 befindet sich eine Flanschplatte 52, an deren Unterseite der bereits genannte Antriebsmotor 54 montiert ist. Die Flanschplatte 52 ist bei dem gezeigten Ausführungsbeispiel integral mit der Basis 51 ausgebildet. In alternativen Ausgestaltungen kann sie auch ein separates Teil sein und mit der Basis 51 verbunden sein, beispielsweise an sie angeschraubt sein. Zur Montage der Verriegelungsvorrichtung 5 zugängliche Bereiche der Basis 51 sind im Betrieb mit Seitenabdeckungen 53 abgedeckt.

Oberhalb der Basis 51 sind die Klemmbacken 55, 56 übereinander angeordnet. Das Auseinanderfahren der Klemmbacken 55, 56 bzw. das Zusammenfahren der Klemmbacken 55, 56 erfolgt mithilfe einer Gewindespindel 573, die Teil eines Antriebsstrang 57 ist. In jeder Klemmbacken 55, 56 ist eine Spindelmutter 552 bzw. 562 angeordnet oder alternativ ein Gewinde ausgebildet. Die Gewindespindel 573 ist ihrem oberen, der Klemmbacken 56 zugeordneten Abschnitt mit einem Gewinde versehen und in ihrem unteren, der unteren Klemmbacken 55 zugeordneten Abschnitt mit einem dazu gegensinnigen Gewinde. Beispielsweise kann im oberen Abschnitt der Gewindespindel 573 ein Rechtsgewinde und im unteren Abschnitt der Gewindespindel 573 ein Linksgewinde ausgebildet sein. Es versteht sich, dass eine entsprechend umgekehrte Anordnung von Rechts- und Linksgewinde ebenfalls möglich ist. Passend zu den Gewindeabschnitten sind auch die Spindelmuttern 552, 562 mit einem entsprechend orientierten Gewinde versehen.

Die Gewindespindel 573 ist drehfest mit einer Laufbuchse 572 verbunden, wobei die Laufbuchse 572 in einer entsprechenden Aufnahme in der Basis 51 drehbar gelagert ist. In Richtung des Antriebsmotors 54 ist die Laufbuchse 572 über eine längenausgleichende Kupplung 571 mit einer Abtriebswelle des Antriebsmotors 54 gekoppelt. Die längenausgleichende Kupplung 571 kann beispielsweise einen Metallbalg aufweisen. Eine Betätigung des Antriebsmotors 54 in die eine oder andere Drehrichtung erfährt entsprechend die Klemmbacken 55, 56 voneinander weg oder aufeinander zu
Die Klemmbacken 55, 56 sind dabei insbesondere in vertikaler Richtung aber ebenso zumindest leicht auch in seitlicher Richtung schwimmend gelagert. Dazu sind zwischen der Basis 51 und der unteren Klemmbacke 55 Führungsstifte 553 vorhanden und zwischen der oberen Klemmbacke 56 und der unteren Klemmbacken 55 eine Führungsleiste 563. Die genannten Führungselemente ermöglichen es, dass die Klemmbacken 55, 56 sich in ihrer Position innerhalb eines gewissen Spielraums frei an die Position der überstehenden Laufprofilabschnitte 14 anpassen können. Durch einen Formschluss der Oberflächen der überstehenden Laufprofilabschnitte 14 und Klemmprofilen 551 bzw. 561 an den Klemmbacken 55 und 56 werden die überstehenden Laufprofilabschnitte 14 dadurch beim Zufahren der Klemmbacken 55, 56 zunächst während des Zufahrens möglichst versatzfrei zueinander ausgerichtet und dann gegeneinander fixiert.

Bei der Verriegelungsvorrichtung 5 sind weiter Sensoren 58, 59 vorhanden, die ein erfolgtes Auf- bzw. Zufahren der Klemmbacken 55, 56 detektieren. Daten bzw. Signale der Sensoren 58, 59 können zur Steuerung des Antriebsmotors 54 verwendet werden. Alternativ zu den Sensoren 58, 59 kann auch eine Messung eines vom Antriebsmotor 54 aufgenommenen Stroms (bei vorgegebener Betriebsspannung) genutzt werden, um ein Zufahren der Klemmbacken 55, 56 bzw. ein Anschlag der unteren Klemmbacke 55 an der Basis 51 zu erfassen.

Im Betrieb des Schienensystems ist vorgesehen, die Verriegelungsvorrichtung 5 an beiden feststehenden Schienenelement 2a, 2b (vgl. Figur 1) zu öffnen, d.h. die Klemmbacken 55, 56 auseinander zu fahren, bevor eine Weichenbewegung mithilfe der Parallelführung 4 erfolgt. Nachdem die Parallelführung 4 die gewünschte Stellung eingenommen hat, wird die Verriegelungsvorrichtung 5, in die das bewegbare Schienenelement 3a oder 3b eingefahren ist, geschlossen, indem die Klemmbacken 55, 56 aufeinander zu gefahren werden. Danach kann der Übergang zwischen den überstehenden Laufprofilabschnitten 14 von einem Laufwagen 6 ohne einen materialschädigenden Versatz befahren werden.

### Bezugszeichen

- 1: Schienensystem
- 11: Tragprofil
- 12: Kopfprofil
- 13: Laufprofil
- 14: überstehender Laufprofilabschnitt

- 2a, 2b: feststehendes Schienenelement
- 3a, 3b: bewegbares Schienenelement
- 4: Parallelführung

- 5: Verriegelungsvorrichtung
- 51: Basis
- 52: Flanschplatte
- 53: Seitenabdeckung
- 54: Antriebsmotor
- 55: Klemmbacke (unten)
551 Klemmprofil
552 Spindelmutter
553 Führungsstift
- 56: Klemmbacke (oben)
561 Klemmprofil
562 Spindelmutter
563 Führungsleiste
- 57: Antriebsstrang
571 Kupplung
572 Laufbuchse
573 Gewindespindel
- 58, 59: Sensor

- 6: Laufwagen
- 61: Träger
- 62: Laufrolle
- 63: Antriebsrolle

## Patentansprüche

1. Weiche für ein Schienensystem (1), bei der Schienenelemente (2a, 2b, 3a, 3b) relativ zueinander bewegbar angeordnet sind, wobei die Schienenelemente (2a, 2b, 3a, 3b) zwei sich gegenüber liegende Laufprofile (13) umfassen, die seitlich hervorstehende Laufflächen für Laufrollen (62) von Laufwagen (6) aufweisen, **gekennzeichnet durch**
mindestens eine Verriegelungsvorrichtung (5), die gegeneinander verfahrbare Klemmbacken (55, 56) aufweist, um die Laufprofile (13) von jeweils zwei der relativ zueinander bewegbaren Schienenelemente (2a, 2b, 3a, 3b) zu klemmen und zueinander auszurichten.

2. Weiche nach Anspruch 1, bei der die Laufprofile (13) der relativ zueinander bewegbaren Schienenelemente (2a, 2b, 3a, 3b) über ein Tragprofil (11) hervorstehen, wobei die Klemmbacken (55, 56) die Laufprofile (13) in überstehenden Laufprofilabschnitten (14) klemmen.

3. Weiche nach Anspruch 1 oder 2, bei der die Klemmbacken (55, 56) Klemmprofile (551, 561) aufweisen, die an die Laufprofile (13) angepasst sind.

4. Weiche nach einem der Ansprüche 1 bis 3, bei der die mindestens eine Verriegelungsvorrichtung (5) eine Gewindespindel (573) aufweist, die durch Gewinde in den Klemmbacken (55, 56) führt.

5. Weiche nach Anspruch 4, bei der die Gewinde durch Spindelmuttern (552, 562) gebildet sind.

6. Weiche nach Anspruch 4 oder 5, bei der die Gewindespindel (573) abschnittsweise mit einem Rechts- und abschnittsweise mit einem Linksgewinde versehen ist.

7. Weiche nach Anspruch 6, bei der die mindestens eine Verriegelungsvorrichtung (5) zwei Klemmbacken (55, 56) aufweist, von denen eine mit dem Rechtsgewinde und die andere mit dem Linksgewinde zusammenwirkt.

8. Weiche nach einem der Ansprüche 4 bis 7, bei der die Gewindespindel (573) über eine längenausgleichende Kupplung (571) mit einem Antriebsmotor (54) drehfest gekoppelt ist.

9. Weiche nach Anspruch 8, bei der die längenausgleichende Kupplung (571) einen Metallbalg aufweist.

10. Weiche nach einem der Ansprüche 1 bis 9, bei der die Klemmbacken (55, 56) der mindestens einen Verriegelungsvorrichtung (5) schwimmend gelagert sind.

11. Weiche nach einem der Ansprüche 1 bis 10, bei der mindestens eine der Klemmbacken (55, 56) gegenüber einer Basis (51) der Verriegelungsvorrichtung (5) durch mindestens einen Führungsstift (553) in ihrer Bewegungsrichtung geführt ist.

12. Weiche nach einem der Ansprüche 1 bis 11, bei der die Klemmbacken (55, 56) durch mindestens eine Führungsleiste (563) zueinander in ihrer Bewegungsrichtung geführt sind.

13. Schienensystem (1) mit Schienenelemente (2a, 2b, 3a, 3b), die zwei sich gegenüber liegende Laufprofile (13) umfassen, die seitlich hervorstehende Laufflächen für Laufrollen (62) von Laufwagen (6) aufweisen, aufweisend mindestens eine Weiche nach einem der Ansprüche 1 bis 12.
